# EUROPÄISCHE PATENTSCHRIFT

(11) **EP 1 425 834 B1**
(45) Veröffentlichungstag und Bekanntmachung des Hinweises auf die Patenterteilung: **20.07.2005**
(21) Anmeldenummer: 02776704.5
(22) Anmeldetag: 09.09.2002
(51) Int. Cl.: H02B 1/56

(54) **FLÄCHENHAFTES BAUTEIL MIT EINER LÜFTUNGSÖFFNUNG**
PLANAR COMPONENT WITH A VENT
ELEMENT STRUCTUREL PLAN COMPORTANT UNE OUVERTURE D'AERATION

(30) Priorität: 10.09.2001 DE 10145830
(43) Veröffentlichungstag der Anmeldung: 09.06.2004
(73) Patentinhaber: SIEMENS AKTIENGESELLSCHAFT, 80333 München (DE)
(72) Erfinder: GOHLICKE, Kay, 04157 Leipzig (DE)
(86) Internationale Anmeldenummer: PCT/DE2002/003587
(87) Internationale Veröffentlichungsnummer: WO 2003/023918

(56) Entgegenhaltungen:
- EP-A- 0 092 049
- EP-A- 0 654 877

## Beschreibung

Die Erfindung betrifft ein als Tür oder Wandelement eines mit wärmeerzeugenden Geräten bestückten Schaltschrankes oder Schaltfeldes einer elektrischen Schaltanlage ausgebildetes flächenhaftes Bauteil mit mehreren parallelen schlitzförmigen Lüftungsöffnungen zur Zuführung von Kühlluft solcher Bemessung, dass Fremdkörper mit einer Größe von 1 mm und mehr nicht einführbar sind.

Ein Bauteil der genannten Art ist durch die DE 43 39 383 A1 bekannt geworden. Dort sind die Schwierigkeiten ausführlich erörtert, eine ausreichende Kühlwirkung mit hohen Anforderungen an den Schutz gegen das Eindringen von Fremdkörpern nach der Schutzart IP4 (bzw. jetzt IP4X) zu kombinieren. Ausgehend von einer früheren Lösung, Lüftungsöffnungen mit einem Drahtgewebe zu hinterlegen, wird die Anordnung eines als Kunststoff-Spritzgussteil ausgebildeten Abdeckteiles hinter den Lüftungsschlitzen beschrieben. Diese Anordnung beruht darauf, dass Belüftungsöffnungen in Blechen einer für Schaltanlagen geeigneten Dicke nur bis zu einem Schutzgrad IP3X wirtschaftlich herstellbar sind. Ab einer Materialdicke über 1,5 mm sind die üblichen Bearbeitungsverfahren, wie beispielsweise Stanzen, für eine Schutzart wie IP4X, mit Öffnungen kleiner als 1 mm, fertigungstechnisch zu aufwendig..

Die Aufgabe der vorliegenden Erfindung besteht, ausgehend von einem Bauteil entsprechend der DE 43 39 383 A1 darin, ein Bauteil mit schlitzförmigen Lüftungsöffnung zur Zuführung von Kühlluft zu schaffen, das mit einem nur geringen fertigungstechnischen Aufwand und mit einem geringen Materialaufwand herstellbar ist, dabei aber den technischen Erfordernissen, nämlich einer guten Durchlüftung und einem Fremdkörperschutz gegen Fremdkörper, welche 1 mm und größer sind, in vollem Umfang Rechnung trägt.

Diese Aufgabe wird erfindungsgemäß dadurch gelöst dass die schlitzförmigen Lüftungsöffnungen durch mittels Umformung hergestellte, aus der Ebene des Bauteils um nicht mehr als 1 mm vorstehende Stege gebildet sind, die in ihrer Längsrichtung beidseitig eine schlitzförmige Öffnung bilden. Als Umformung werden im vorliegenden Zusammenhang alle geeigneten formgebenden Bearbeitungsverfahren verstanden, z. B bei Blech die bekannten Schneid-Prägeverfahren sowie bei Kunststoffen die Verarbeitung im Spritzgussverfahren oder, ausgehend von ebenen Kunststoffplatten, Schneiden und Prägen mit oder ohne Anwendung von Wärme.

Für die Erfindung ist es wesentlich, dass die ausgeprägten, hochgestellten Stege trotz ihres geringen Abstandes gegenüber der Ebene des Bauteiles gemeinsam einen ausreichenden Lüftungskanal bilden. Dabei ist die Anzahl der Stege und somit die Anzahl der Lüftungsschlitze abhängig von den Erfordernissen des Luftdurchsatzes. Deshalb ist es zweckmäßig, jeweils mehrere Stege in einer Steggruppe anzuordnen, und es können, je nach dem erforderlichen Luftdurchsatz, mehrere Steggruppen in einer geeigneten Konfiguration nebeneinander und übereinander vorgesehen sein. Als vorteilhaft hat es sich insbesondere erwiesen, wenn mehrere Steggruppen in dem Bauteil in einer linearen Reihe angeordnet sind.

Wenn die Breite der Stege und der Abstand zwischen den Stegen so klein wie fertigungstechnisch möglich gewählt wird, kann ein Verhältnis von Lüftungsquerschnitt zur Gesamtfläche des Bauteils von etwa 50% erreicht werden.

Die Anordnung der Stege und damit der Lüftungsschlitze ist sowohl horizontal als auch vertikal möglich.

Durch die erfindungsgemäße Lösung werden einstückige, als Tür oder Gehäusewandung verwendbare Bauteile geschaffen, die eine Schutzart IPX4 (Fremdkörperschutz gleich oder größer 1 mm) ermöglichen und die im Unterschied zu Lüftungsöffnungen mit Drahtgewebe nicht mit einem spitzen Gegenstand durchgestoßen werden können. Dennoch wird eine ähnlich große Durchtrittsfläche wie bei Drahtgewebe erreicht.

Durch die DE 32 14 823 A1 ist es bei einem Lüftungsgitter für zur Aufnahme von elektronischen Baugruppen bestimmte Gerätegehäuse bereits bekannt, aus einer Platte durch Schlitze begrenzte Streifen parallel zur Ebene der Platte herauszudrücken. Diese Lüftungsschlitze sind in eine mit Rippen versehene Platte derart eingebracht, dass Rippen und Lüftungsschlitze einander abwechseln. Die Streifen oder Stege sind um 4 mm gegenüber der Ebene der Platte herausgehoben. Hierdurch ist das bekannte Lüftungsgitter für Schaltschränke und Schaltanlagen der Energietechnik offensichtlich nicht brauchbar, da es den Schutz gegen das Eindringen von Fremdkörpern ab 1 mm Größe nicht gewährleistet.

Die Erfindung soll zum besseren Verständnis nachfolgend anhand eines bevorzugten, den Schutzumfang nicht einschränkenden, Ausführungsbeispiels näher erläutert werden.

Die Fig. 1 zeigt eine Steggruppe gemäß der vorliegenden Erfindung in einem als Tür- oder Gehäusewandung verwendbaren Bauteil.

Die Fig. 2 zeigt eine Schnittdarstellung eines Steges gemäß der vorliegenden Erfindung entlang der Linie II-II in der Fig. 1.

Die Fig. 3 zeigt eine erste mögliche Ausführungsform der Steggruppen-Anordnung gemäß der vorliegenden Erfindung in einem als Tür- oder Gehäusewandung verwendbaren Bauteil.

Die Fig. 4 zeigt eine weitere mögliche Ausführungsform der Steggruppen-Anordnung gemäß der vorliegenden Erfindung in einem als Tür- oder Gehäusewandung vorgesehenen Bauteil.

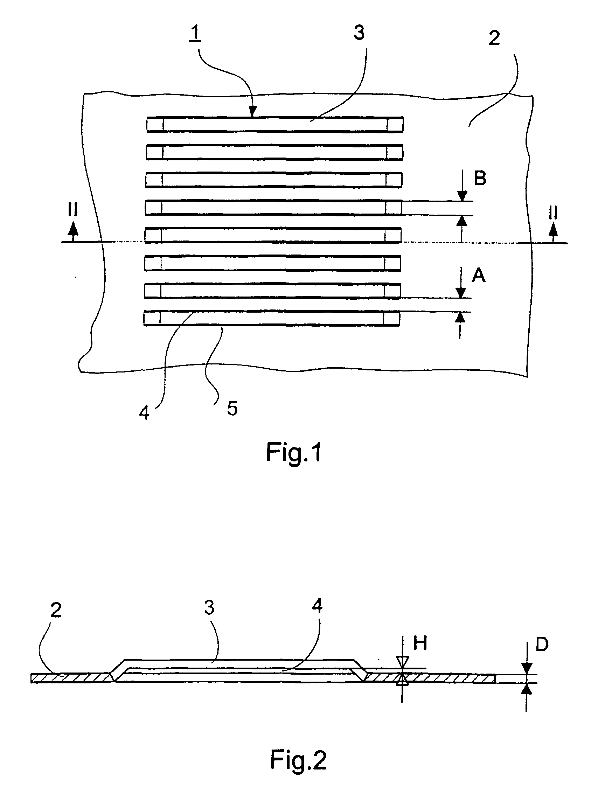

Die Fig. 1 zeigt eine Steggruppe 1 gemäß der vorliegenden Erfindung in einem Bauteil 2, das als Tür oder als Gehäusewandung eines Schaltschrankes oder Schaltfeldes einer Schaltanlage zu verwenden ist. Die Stege 3 Der Steggruppe 1 werden durch eine örtliche Umformung des Bauteiles 2 nach der Art einer Prägung hergestellt, derart, dass beiderseitig in der Längsrichtung je ein offener Schlitz 4; 5 vorhanden ist. Dabei sind die Breite B des Steges 3 und der Abstand A zwischen den Stegen 3 so klein, wie fertigungstechnisch möglich gewählt. Dadurch ist ein Verhältnis von Lüftungsquerschnitt zu benutzter Fläche des Bauteils 2 (Tür oder Gehäusewandung) von etwa 50% erreichbar.

Die Fig. 2 zeigt eine Schnittdarstellung eines Steges gemäß der vorliegenden Erfindung entlang der Linie II-II in der Fig. 1. Der Steg 3 ist aus dem Bauteil 2 um die Höhe H herausgedrückt (geprägt). Diese Höhe H, welche die Größe der Lüftungsöffnung definiert, wird an den beiden Seiten der Stege 3 durch die Höhe der Umformung abzüglich der Materialdicke D festgelegt.

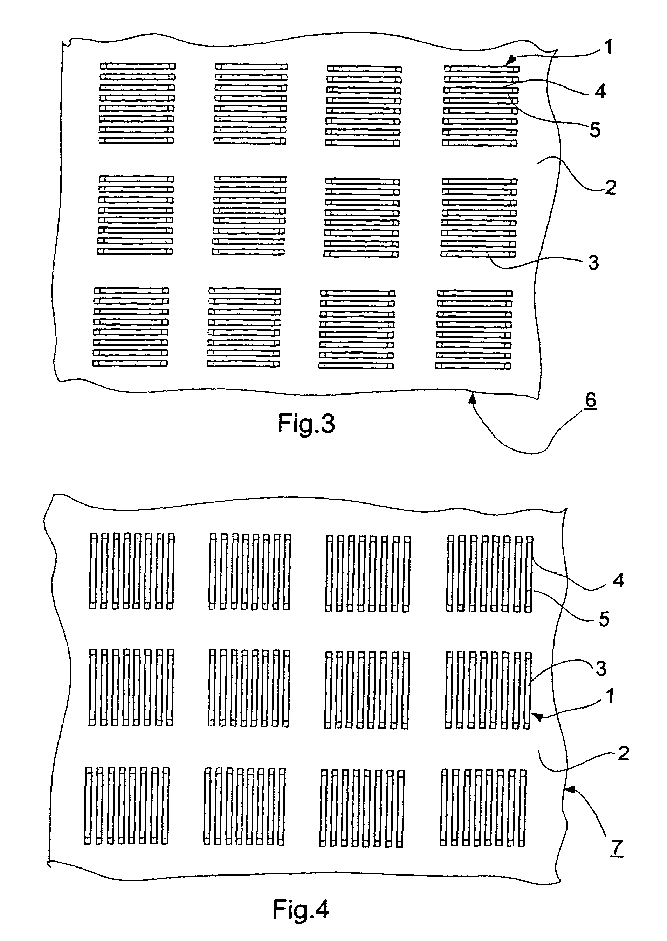

Die Fig. 3 zeigt eine erste mögliche Ausführungsform einer Steggruppen-Anordnung 6 gemäß der vorliegenden Erfindung in einem Bauteil 2. Die Anzahl der Steggruppen 1 ist abhängig vom erforderlichen Luftdurchsatz. Im vorliegenden Beispiel sind insgesamt zwölf Steggruppen 1 in einer Anordnung von vier Steggruppen 1 nebeneinander und drei Steggruppen 1 übereinander angeordnet. Die Stege 3 sind dabei waagerecht angeordnet.

Die Fig. 4 zeigt eine weitere mögliche Ausführungsform einer Steggruppen-Anordnung 7 gemäß der vorliegenden Erfindung in einem Bauteil 2. Auch hier gilt, dass die Anzahl der Steggruppen 1 vom erforderlichen Luftdurchsatz bestimmt wird. Auch in diesem Beispiel sind insgesamt zwölf Steggruppen 1 in einer Anordnung von vier Steggruppen 1 nebeneinander und drei Steggruppen 1 übereinander angeordnet. Die Stege 3 sind dabei aber senkrecht angeordnet.

Die Vorteile der erfindungsgemäßen Lösung bestehen außer in der fertigungstechnisch einfachen und materialsparenden Bauweise vor allem darin, dass diese Fertigungsweise nicht, wie beim Stanzen, durch die Materialdicke eingeschränkt wird und dass keine Zusatzteile benötigt werden. Ferner ist kein direktes rechtwinkeliges Durchdringen des Bauteiles möglich, weil ein in dieser Richtung auftretender Angriff z. B. durch einen Störlichtbogen oder ein Werkzeug bzw. Fremdkörper von den Stegen wirksam abgewiesen wird.

## Patentansprüche

1. Als Tür oder Wandelement eines mit wärmeerzeugenden Geräten bestückten Schaltschrankes oder Schaltfeldes einer elektrischen Schaltanlage ausgebildetes flächenhaftes Bauteil (2) mit mehreren parallelen schlitzförmigen Lüftungsöffnungen zur Zuführung von Kühlluft solcher Bemessung, dass Fremdkörper mit einer Größe von 1mm und mehr nicht einführbar sind,
**dadurch gekennzeichnet,**
**dass** die schlitzförmigen Lüftungsöffnungen durch mittels Umformung hergestellte, aus der Ebene des Bauteils (2) um nicht mehr als 1 mm vorstehende Stege (3) gebildet sind, die in ihrer Längsrichtung beidseitig eine schlitzförmige Öffnung bilden.

2. Bauteil nach Anspruch 1,
**dadurch gekennzeichnet,**
**dass** zur Sicherstellung des erforderlichen Luftdurchsatzes mehrere Stege (3) in einer Steggruppe (1) angeordnet sind.

3. Bauteil nach Anspruch 2.,
**dadurch gekennzeichnet,**
**dass** mehrere Steggruppen (1) nebeneinander und übereinander vorgesehen sind.

4. Bauteil nach Anspruch 2 oder 3,
**dadurch gekennzeichnet,**
**dass** mehrere Steggruppen (1) in einer linearen Reihe angeordnet sind.

5. Bauteil nach einem der vorangehenden Ansprüche,
**dadurch gekennzeichnet,**
**dass** das Verhältnis des gesamten Lüftungsquerschnittes zur Gesamtfläche des Bauteils (2) etwa 50% beträgt.

6. Bauteil nach einem der vorangehenden Ansprüche,
**dadurch gekennzeichnet,**
**dass** die Stege (3) horizontal angeordnet sind.

7. Bauteil nach einem der vorangehenden Ansprüche,
**dadurch gekennzeichnet,**
**dass** die Stege (3) vertikal angeordnet sind.

## Claims

1. Planar component (2) which is formed as a door or wall element of a switch cabinet or control panel of an electrical switching system fitted with devices that generate heat and has a number of parallel slit-shaped vents for supplying cooling air which are dimensioned such that foreign bodies of a size of 1 mm or more cannot enter, **characterized in that** the slit-shaped vents are formed by webs (3) which are produced by means of deformation, protrude from the plane of the component (2) by no more than 1 mm and in their longitudinal direction form a slit-shaped opening on both sides.

2. Component according to Claim 1, **characterized in that**, to ensure the required air throughput, a number of webs (3) are arranged in a group of webs (1).

3. Component according to Claim 2, **characterized in that** a number of groups of webs (1) are provided next to one another and above one another.

4. Component according to Claim 2 or 3, **characterized in that** a number of groups of webs (1) are arranged in a linear row.

5. Component according to one of the preceding claims, **characterized in that** the ratio of the total venting cross section to the overall surface area of the component (2) is approximately 50%.

6. Component according to one of the preceding claims, **characterized in that** the webs (3) are arranged horizontally.

7. Component according to one of the preceding claims, **characterized in that** the webs (3) are arranged vertically.

## Revendications

1. Élément (2) à deux dimensions - sous forme d'une porte ou d'un élément de paroi d'une armoire de distribution ou d'un panneau de distribution équipé(e) d'appareils calorifiques et destiné(e) à une installation de distribution électrique - muni de plusieurs orifices d'aération en forme de fentes parallèles qui servent à apporter de l'air de refroidissement et dont les dimensions sont telles qu'il n'est pas possible d'introduire des corps étrangers d'une dimension supérieure ou égale à 1 mm,
**caractérisé en ce que** les orifices d'aération en forme de fentes sont obtenus par des traverses (3), produites par déformation, qui ne dépassent pas de plus de 1 mm du plan du élément (2) et qui forment une ouverture en forme de fente de chaque côté en direction longitudinale.

2. Élément selon la revendication 1, **caractérisé en ce que** plusieurs traverses (3) sont placées dans un groupe de traverses (1) pour assurer le débit d'air nécessaire.

3. Élément selon la revendication 2, **caractérisé en ce que** plusieurs groupes de traverses (1) sont prévus les uns à côté et les uns au-dessus des autres.

4. Élément selon la revendication 2 ou 3, **caractérisé en ce que** plusieurs groupes de traverses (1) sont ordonnés en une rangée rectiligne.

5. Élément selon l'une des revendications précédentes, **caractérisé en ce que** le rapport de la section transversale d'aération à la surface totale du élément (2) est d'environ 50 %.

6. Élément selon l'une des revendications précédentes, **caractérisé en ce que** les traverses (3) sont placées à l'horizontale.

7. Élément selon l'une des revendications précédentes, **caractérisé en ce que** les traverses (3) sont placées à la verticale.
